Europäisches Patentamt

European Patent Office

Office européen des brevets

(11) Veröffentlichungsnummer: **0 208 809**
A2

## (12) EUROPÄISCHE PATENTANMELDUNG

(21) Anmeldenummer: 85112651.6

(22) Anmeldetag: 05.10.85

(51) Int. Cl.⁴: **H 01 B 1/24**, C 08 K 3/04, C 08 J 9/00, C 08 L 23/06

(30) Priorität: 21.05.85 DE 3518133

(43) Veröffentlichungstag der Anmeldung: 21.01.87 Patentblatt 87/4

(84) Benannte Vertragsstaaten: **AT BE CH DE FR GB IT LI LU NL SE**

(71) Anmelder: **Firma Carl Freudenberg, Höhnerweg 4, D-6940 Weinheim/Bergstrasse (DE)**

(72) Erfinder: **Siebert, Werner, Kreuzberger Strasse 59, D-6148 Heppenheim (DE)**
Erfinder: **Graab, Gerhard, Dr., Nibelungenring 41, D-6800 Mannheim (DE)**

(74) Vertreter: **Weissenfeld-Richters, Helga, Dr., Höhnerweg 2, D-6940 Weinheim/Bergstrasse (DE)**

(54) Elektrisch leitfähige Weichschaumplatte.

(57) Elektrisch leitfähige Weichschaumplatte, bestehend aus einem Weichschaumkörper aus einem geschlossenzellig geschäumten, vernetzten Polyethylen und einem Ruß-pulver, das gleichmäßig in der Polymermatrix das den Weichschaumkörper bildenden Polyethylens verteilt ist.

EP 0 208 809 A2

**Dr. H. Weissenfeld-Richters**

Patentanwältin

0208809

Hönnerweg 2-4
6940 Weinheim/Bergstr.
Telefon (0 62 01) 80-8618
Telex 4 65 531

2. Oktober 1985
Mo/Sch
ON 5043/Europa

1

Anmelderin: Firma Carl Freudenberg, 6940 Weinheim

Elektrisch leitfähige Weichschaumplatte

Elektrisch leitfähige Weichschaumplatte, bestehend
aus einem Weichschaumkörper mit einem Gehalt an leitfähigem Rußpulver.

Auf eine Weichschaumplatte der vorgenannten Art nimmt
die DE-OS 29 40 260 Bezug. Sie dient als Hilfmittel
für den Transport elektronischer Bauelemente und soll
neben elektrostatischen Aufladungen, die zu einer Zerstörung solcher Teile führen können, transportbedingte
Erschütterungen von denselben fernhalten. Beiden Zwecken
wird die vorstehend beschriebene Weichschaumplatte aufgrund ihres speziellen Aufbaues nur in unzureichendem Maße gerecht. Der Aufbau von Weichschaumplatten der
angegebenen Art resultiert aus der bei deren Fertigung
angewandten Herstellungsmethode. Diese ist dadurch gekennzeichnet, daß zunächst Polyurethanschaumpartikel mit
einem Bindemittel benetzt werden, daß die benetzten
Partikel mit elektrisch leitfähigem Rußpulver vermischt
und anschließend durch Verpressen in die gewünschte Gestalt überführt werden. Starke Inhomogenitäten des Querschnittes der Weichschaumplatte in jeglicher Hinsicht
sind hiervon die Folge. Sie führen dazu, daß die beschriebene Weichschaumplatte nur wenig geeignet ist für die
Lagerung und den Transport elektronischer Bauelemente.

Ein besonderes Problem stellt diesbezüglich die stark
variierende Dichteverteilung im Inneren der Weichschaumplatte dar. Diese ist einerseits gekennzeichnet durch
die auf die Oberflächen der Polyurethanschaumpartikel
beschränkten, porenfreien Bindemittelzonen, in welchen
das elektrisch leitfähige Rußpulver kumuliert ist und
andererseits durch vollkommen offene Freiräume zwischen
benachbarten Polyurethanschaumpartikeln, die auch bei
Anwendung erheblicher Verdichtungsgerade nicht völlig
vermeidbar sind. Der mechanische Widerstand, den eine
entsprechende Weichschaumplatte einem eindringenden
Kontaktstift eines elektronischen Bauelementes entgegensetzt, kann demzufolge je nach Bereich stark variieren
und dazu führen, daß der Kontaktstift entweder einknickt
oder nach dem Einstechen nicht in dem gewünschten Maße
festgehalten wird. Beides ist wenig befriedigend und
kann insbesondere dann zu Problemen führen, wenn an
dem elektronischen Bauelement eine Vielzahl entsprechender Kontaktstifte vorhanden ist, was bei komplexeren
Ausführungen jedoch der Norm entspricht.

Die elektrisch leitfähigen Bereiche sind bei der beschriebenen Weichschaumplatte auf die Oberflächen der enthaltenen
Polyurethanschaumpartikel beschränkt und es ist deshalb anzustreben, daß die Oberflächen möglichst unversehrt
erhalten sind. Eine mechanische Bearbeitung der Oberfläche
der Weichschaumplatte, die sich beispielsweise beim
Aufspalten dickerer Schaumstoffblöcke ergibt, muß aus
diesem Grunde unterbleiben und zwingt zur Einzelfertigung, was neben einem hohen Preis eine Bindemittelkumulation
an der Oberfläche der Weichschaumplatte zur Folge hat.
Das Einstechen der Kontaktstifte von elektronischen
Bauelementen wird hierdurch erschwert.

Desweiteren muß die vorstehend beschriebene Weichschaumplatte als offenporig bezeichnet werden, wodurch Staub
und Feuchtigkeit in das Innere der Weichschaumplatte
einzudringen vermögen. Neben einer indifferenten Beeinflussung der elektrischen Leitfähigkeit kann sich hierdurch eine funktionsgefährdende Kontamination der Kontaktstifte und der Bauelemente ergeben, was nicht erwünscht
ist.

Der Erfindung liegt die Aufgabe zugrunde, eine kostengünstige Weichschaumplatte der eingangs genannten Art derart weiter zu entwickeln, daß die beschriebenen Nachteile
mit Sicherheit vermieden werden. Die Weichschaumplatte
soll es insbesondere erlauben, die Kontaktstifte der
gebräuchlichen elektronischen Bauelemente ohne die Gefahr der Abknickung an beliebiger Stelle leicht einzustechen und die Bauelemente nach beliebig langer Lagerung
leicht zu entnehmen. Die Weichschaumplatte soll den
aufgenommenen Bauelementen darüber hinaus auch bei hängender Lagerung während des Transportes einen sicheren
Halt verleihen und funktionsgefährdende Schwingungen
von denselben in einem ausreichenden Maße fernhalten.

Diese Aufgabe wird erfindungsgemäß bei einer Weichschaumplatte der eingangs genannten Art dadurch gelöst, daß
der Weichschaumkörper aus einem geschlossenzellig geschäumten, vernetzten Polyethylen besteht und daß das Rußpulver gleichmäßig in der Polymermatrix des den Weichschaumkörper bildenden Polyethylens verteilt ist.

Der Weichschaumkörper der vorgeschlagenen Weichschaumplatte ist durch eine außerordentlich feinzellige, gleichmäßige Porenstruktur gekennzeichnet, bei der die einzelnen Poren sowohl nach außen als auch gegeneinander abgeschlossen sind. Feuchtigkeit und Staub vermögen daher
aus der Umgebung nicht in das Innere der Porenstruktur
einzudringen, wodurch eingestochene Kontaktstifte in
keiner Weise kontaminationsgefährdet sind. Durch das Einstechen der Kontaktstifte entstehender Materialabrieb
wird im Inneren der Poren gespeichert und beim Herausziehen der Kontaktstifte scheibenwischerähnlich von denselben abgestreift.

Der Weichschaumkörper besteht durchgehend aus den die
Poren begrenzenden, außerordentlich dünnen Membranhäutchen.
Er vermag eindringenden Kontaktstiften daher an beliebiger Stelle keinen nennenswerten Widerstand entgegenzusetzen.
Dennoch werden die zugehörigen elektronischen Bauelemente
in ausgezeichneter Weise festgehalten, was sehr wahrscheinlich darauf zurückzuführen ist, daß jedes einzelne der
vielen von jedem Kontaktstift durchschnittenen Membranhäutchen sich eng an dessen Oberfläche anzuschmiegen
und in winzigste Oberflächenunregelmäßigkeiten einzudringen vermag. Die hierfür erforderliche Elastizität dürfte
neben der geringen Dicke der Membranhäutchen auch auf
die vernetzte Molekularstruktur des verwendeten Polyethylens zurückzuführen sein.

Der Weichschaumkörper ist durch den gleichmäßigen in
der Polymermatrix verteilten Rußgehalt an allen Stellen
gleich gut leitfähig und der elektrische Kontakt zu
einem jeden der Kontaktstifte eingesteckter elektronischer
Bauelemente ist durch die Vielzahl der elastisch daran
angepreßten Membranhäutchen stets gewährleistet. Neben
Fehlschaltungen werden hierdurch Schädigungen der eingesteckten elektronischen Bauelemente infolge elektrostatischer Aufladung sicher vermieden. Das verwendete Polyethylen hat wachsähnliche, wasserabstoßende Eigenschaften. Eine nachträgliche Veränderung der elektrischen
Leitfähigkeit als Folge einer Ansammlung von Feuchtigkeit
an der Oberfläche des Weichschaumkörpers ist hierdurch
weitgehend ausgeschlossen.

Der Weichschaumkörper besteht vorzugsweise aus einem
strahlenvernetzten Polyethylen, was seine Herstellung
unter weitgehender Vermeidung eines Zusatzes von aggressiven
Fremdstoffen erlaubt. Die Korrosionsgefährdung der Kontaktstifte eingesteckter Bauelemente ist hierdurch weiter
vermindert.

Das Raumgewicht des Weichschaumkörpers soll 40 bis 90
kg/m³ betragen. Niedrigere Raumgewichte verleihen eingesteckten Bauelementen nicht mehr den notwendigen Halt.
Höhere Raumgewichte können demgegenüber zu Schwierigkeiten beim Einstechen der Kontaktstifte führen und unter
Umständen zu deren Einknicken. Ein Raumgewicht zwischen
60 und 80 kg/m³ wird aus diesem Grunde bevorzugt und
erlaubt sowohl beim Einstechen der Bauelemente als auch
bei deren Entnahme die problemlose Verwendung von Bestückungautomaten.

Die in allen Teilbereichen gleichmäßige elektrische Leitfähigkeit des Weichschaumkörpers der erfindungsgemäßen
Weichschaumplatte erlaubt es, diesen ohne Veränderung
der grundsätzlichen elektrischen Eigenschaften in beliebiger Weise mechanisch zu bearbeiten. Das Spalten
relativ großformatiger Schaumstoffblöcke in dünne Schaumstoffschichten kann dadurch ohne weiteres in die Überlegungen einbezogen werden und begünstigt eine kostengünstige Herstellung. Zugleich resultiert an der durch den
Spaltvorgang erzeugten Oberfläche eine Raumstruktur
des Weichschaumkörpers, die durch eine Vielzahl senkrecht abstehender, einander begrenzender, angeschnittener Membranhäutchen gekennzeichnet ist. Diese verhindern ein seitliches Abgleiten gegebenenfalls geringfügig
verbogener Kontaktstifte während des Einstechvorganges
und wirken sich somit günstig aus im Hinblick auf eine
problemfreie Verwendung der erfindungsgemäß vorgeschlagenen Weichschaumplatte. Der Gehalt an Rußpulver in
der Polymermatrix der vorgeschlagenen Weichschaumplatte
ist relativ gering und soll bei Verwendung eines
Flammrußes von 14 bis 40 Gew.-% betragen. Eine
ausreichende elektrische Leitfähigkeit ist hierdurch
ebenso gewährleistet wie die Möglichkeit, auch dünne
Kontaktstifte von elektronischen Bauelementen ohne die
Gefahr des Abknickens leicht einstechen zu können.

Eine beispielhafte Ausführung der erfindungsgemäßen
Weichschaumplatte wird in der in der Anlage beigefügten
Zeichnung in bestimmungsgemäßer Verwendung gezeigt.
Sie wird nachfolgend näher erläutert.

Die gezeigte Weichschaumplatte besteht aus einem geschlossenzellig geschäumten, strahlenvernetzten Polyethylen
das ein Raumgewicht von 50 kg/m³ aufweist. Die Oberfläche
ist durch einen mechanischen Bearbeitungsvorgang aufgeschnitten, so daß in diesem Bereich dicht nebeneinander
liegende, geöffnete Zellen sichtbar sind. Der mittlere
Maximaldurchmesser der einzelnen Zellen beträgt 0,3 mm.
Selbst sehr dünne Kontaktstifte von auf die Oberfläche
aufgesetzten, elektronischen Bauelemten werden hierdurch
an einem seitlichen Ausgleiten gehindert und dringen
bei Ausübung einer senkrecht gegen die Oberfläche gerichteten Kraft ohne weiteres in diese ein. Die Kontaktstifte werden im Inneren der Weichschaumplatte durch
die sich eng an ihre Oberfläche anschmiegenden, dünnen
Membranhäutchen festgehalten und zugleich elektrisch
kurzgeschlossen. Selbst erhebliche Erschütterungen können dadurch nicht mehr zu einem unbeabsichtigten Herausfallen der gegebenenfalls hängend transportierten, elektronischen Bauelemente führen. Die elektrische Kurzschließung gewährleistet zugleich eine Neutralisierung der
elektrischen Schaltung und verhindert Schädigungen der
Bauelemente infolge elektrostatischer Aufladung. Die
Dicke der Weichschaumplatte beträgt 6 mm.

8

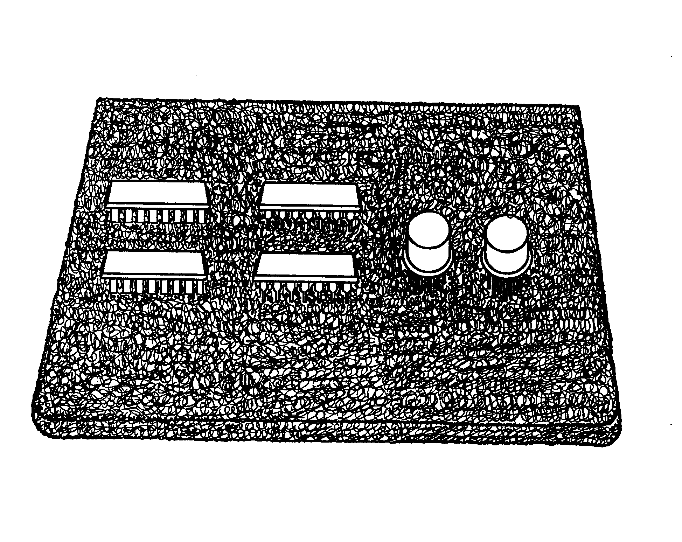

Patentansprüche:

1. Elektrisch leitfähige Weichschaumplatte, bestehend aus einem Weichschaumkörper mit einem Gehalt an leitfähigem Rußpulver, dadurch gekennzeichnet, daß der Weichschaumkörper aus einem geschlossenzellig geschäumten, vernetzten Polyethylen besteht und daß das Rußpulver gleichmäßig in der Polymermatrix des den Weichschaumkörper bildenden Polyethylens verteilt ist.

2. Weichschaumplatte nach Anspruch 1, dadurch gekennzeichnet, daß das den Weichschaumkörper bildende Polyethylen strahlenvernetzt ist.

3. Weichschaumplatte nach Anspruch 1 bis 2, dadurch gekennzeichnet, daß der Weichschaumkörper ein Raumgewicht von 40 bis 90 kg/m³ aufweist.

4. Weichschaumplatte nach Anspruch 1 bis 3, dadurch gekennzeichnet, daß der Weichschaumkörper ein Raumgewicht von 60 bis 80 kg/m³ aufweist.

5. Weichschaumplatten nach Anspruch 1 bis 4, dadurch gekennzeichnet, daß der Weichschaumkörper eine Deckfläche aufweist, die durch eine mechanische Bearbeitung geöffnete Zellen aufweist.

6. Weichschaumplatten nach Anspruch 5, dadurch gekennzeichnet, daß die Deckfläche durch Abspalten einer Deckschicht erzeugt ist.

7. Weichschaumplatte nach Anspruch 1 bis 6, dadurch gekennzeichnet, daß der Gehalt an Rußpulver in der Polymermatrix bei Verwendung eines Flammrußes von 14 bis 40 Gew.-% beträgt.

1/1